# EUROPEAN PATENT APPLICATION

(11) **EP 2 088 407 A1**
(43) Date of publication of application: **12.08.2009**
(21) Application number: 08002278.3
(22) Date of filing: 07.02.2008
(51) Int. Cl.: G01G 23/00, G01G 19/14

(54) **Load indicating system**

(71) Applicant: Tedea Huntleigh International Ltd., 42506 Netanya (IL)
(72) Inventor: Shaia, Benjamin, Kfar Saba 44421 (IL); Shurki, Roni, Modiin (IL); Bortman, Eyal, Rishon-Lezion 75287 (IL); Alon, Dani, Hod-Hasharon 45343 (IL); Sweeney, Frank, Shipley West Yorkshire, BD18 3ND (GB)
(74) Representative: Manitz, Finsterwald & Partner GbR

(57) **Abstract**

The present invention relates to a load indicating system comprising: at least one load sensitive device for determining a first load value; at least one tilt sensitive device for determining a tilt angle formed between a load sensitive axis of the load sensitive device and a predefined plane of reference; a control unit coupled to the load sensitive device and the tilt sensitive device for determining a tilt compensated second load value based on the first load value and the tilt angle; and a wireless communication link to communicate data between the control unit and a remote indicating means.
May comprise correction of the tilt compensated second load value for local gravity conditions by receiving latitude and elevation data from a global positioning system (GPS).

## Description

The present invention relates to a load indicating system which comprises at least one load sensitive device for determining a load value, i.e. for measuring force and/or weight.

A system of the aforementioned kind is generally known and is typically used to indicate the state of load of a load handling apparatus such as, for example, a mobile vehicle crane, a cable laying system, a mooring, a winch, a torque meter or a web tension system.

A known load indicating system encounters the problem of being difficult to employ in situations where the presence of cabling would produce undesirable hazards regarding entrapment of cables and/or lack of mobility of a system, or in situations where the force direction is not aligned with the measuring direction of the load sensitive device.

It is an object of the invention to provide an improved system for indicating the state of load of a load handling apparatus, and, in particular, a load indicating system which overcomes the aforementioned problems.

This object is satisfied by the load indicating system of claim 1.

The system of the invention comprises at least one load sensitive device for determining a first load value; at least one tilt sensitive device for determining a tilt angle formed between a load sensitive axis of the load sensitive device and a predefined plane of reference; a control unit coupled to the load sensitive device and the tilt sensitive device for determining a tilt compensated second load value based on the first load value and the tilt angle; and a wireless communication link to communicate data between the control unit and a remote indicating means.

The determination of a tilt angle formed between the load sensitive axis of the load sensitive device and the predetermined plane of reference allows for the determination of a tilt compensated second load value based on the first load value and the tilt angle, which in turn makes it possible to accurately determine and indicate the state of load of a load handling apparatus, even if the direction of force or weight is not aligned with the measuring direction of the load sensitive device. The load sensitive device may have one load sensitive axis or two load sensitive axes, thus making single axis or dual axes tilt compensation possible.

Due to the wireless communication link, data relating to the first load value, the tilt angle and/or the tilt compensated second load value can be communicated from the control unit to the remote indicating means for displaying and/or further processing, even if the control unit and the indicating means are arranged at a distant from each other and/or the control unit is located in an inaccessible position.

Hence, the system of the invention is beneficial in that it allows a highly sophisticated weighing and/or force measuring system to be employed in situations where the presence of cabling would produce undesirable hazards regarding entrapment of cables and/or lack of mobility of the system, and/or in situations where the force direction is not aligned with the sensor measuring direction.

According to one embodiment, the predefined plane of reference is an artificial horizon with respect to the earth.

The second load value may be determined by applying to the first load value a correction factor that is based on the tilt angle.

Preferably, there is also provided a correction of the tilt compensated second load value for local gravity conditions. To this end, the control unit may be coupled to a position receiving device for receiving latitude and elevation data from a global positioning system. Alternatively or additionally, the latitude and elevation data may be entered manually by an operator of the system via a user interface and transmitted to the control unit, for example, via the wireless communication link. The control unit may be configured to correct the second load value based on data obtained from a pre-programmed lookup table or a corresponding mathematical calculation based on the received the latitude and elevation data. The correction for local gravity conditions makes it possible to further refine the accuracy of the indicated state of load, in particular, when the system is used in a mobile application.

According to another embodiment, the control unit is configured to determine based on the input from the load sensitive device and/or the tilt sensitive device if the amount of the determined second load value is valid. For example, the input from the load sensitive device, i.e. the weight/force readings, and/or the input from the tilt sensitive device, i.e. the tilt readings, may be evaluated in terms of amplitude variations and/or frequency of change. In this way, the control unit is capable of automatically detecting severe motion conditions, such as when a crane is moving particularly quickly and the weight/force reading is distorted by the acceleration or, in a web tension application, when the web angle changes abruptly and/or drastically, for example, because the web was torn or due to an external event.

Furthermore, the control unit may be configured to determine based on the input from the load sensitive device and/or the tilt sensitive device if a weight indication or a force indication is to be employed.

A load sensitive device typically is primarily sensitive to a load imposed along its load sensitive axis, which is also referred to as the primary axis, and as such less sensitive to a load operating at an angle with respect to the load sensitive or primary axis.

When a load sensitive device is positioned such that its primary axis is aligned both with the direction in which the load acts and with the direction of the force of gravity, then the load sensitive device will determine the true load.

However, if the load acts in a direction that forms an angle either with the orientation of the primary axis of the load sensitive device or with the direction of the force of gravity, then the determined load is reduced proportionately governed by the cosine of that angle.

If the load sensitive device is tilted, then the tilt sensitive device which is intimately sensing the orientation of the load sensitive device will report the angle to the control unit which in turn will compensate for the reduction in the determined load to indicate the true load.

However, if the load sensitive device is not tilted with respect to the earth's gravitational force but the direction in which the load acts is, then the indicated load will be reduced without further compensation. In such circumstances the load is usually free to swing to and fro below the load sensitive device at fundamental frequencies in the order of less than a few cycles per second. The control unit can then use this signal from the load sensitive device to determine the true load by employing, for example, a peak detection calculation.

A further condition to consider is when the load is not completely free to move under the influence of the force of gravity but is grounded or restrained in some manner. The load sensitive device may also be operating at an angle. In these circumstances, the tilt sensitive device will indicate to the control unit that since the changes in angle of the load sensitive device is not consistent with a freely oscillating load the load value should be indicated in units of force rather than in units of weight.

Preferably, the load sensitive device includes at least one element of the group comprising a strain gauge, a hydraulic load cell, a magneto-elastic load cell and a piezo-electric load cell.

According to another embodiment, the load sensitive device is an integral part of a load handling apparatus, i.e. it is intimately constructed into the load handling apparatus. Accordingly, the tilt sensitive device may be integrated into the load handling apparatus.

According to still another embodiment, the remote indicating means comprises a display, a controller and a user interface. The display may be used to display the determined state of load of a load handling apparatus to an operator of the apparatus. By means of the user interface a user can enter user commands into the controller, which can be communicated to the control unit via the wireless communication link. Thereby it is easily possible to update software implemented in the control unit, to update pre-programmed lookup tables used by the control unit and/or to adapt the control unit and thus the entire load indicating system to different working conditions.

The display, the controller and the user interface may be integrated to form a unit.

A preferred embodiment of the invention will now be described with reference to the drawing, in which:

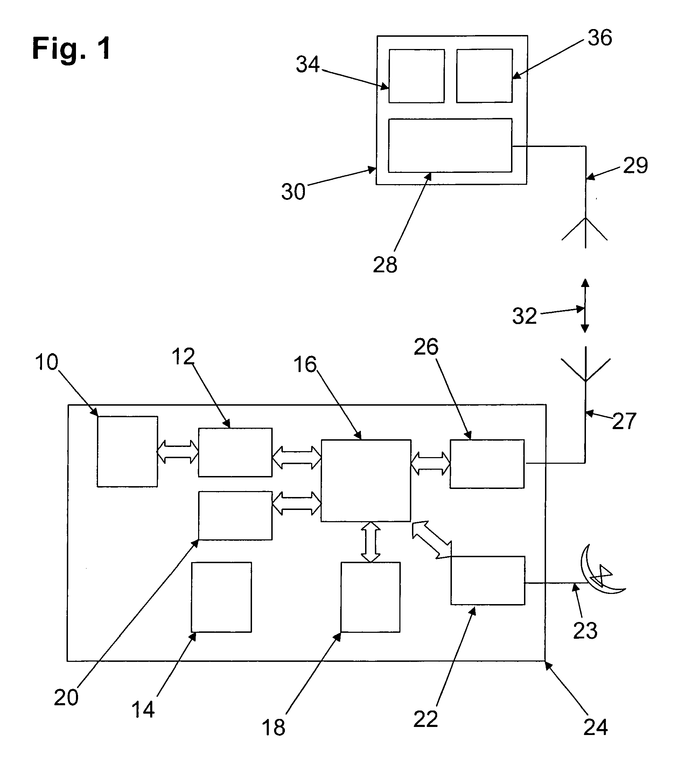

- Fig. 1: is a schematic illustration of a load indicating system of the invention.

Fig. 1 shows a load indicating system for indicating the state of load of a load handling apparatus. The load handling apparatus may, for example, be a mobile vehicle crane, a cable lane system, a mooring, a winch, a torque meter or a web tension system.

The load indicating system comprises a load sensitive device or transducer 10 which is subject to mechanical forces imposed by the load handling apparatus. The load sensitive device 10 is mounted on the load handling apparatus at a position suitable for measuring the magnitude of a load, i.e. a force or a weight, handled by the load handling apparatus.

In order to measure the magnitude of the mechanical forces imposed by the load handling apparatus, the load sensitive device 10 comprises at least one strain gauge. Alternatively or additionally, the load sensitive device 10 may comprise a hydraulic load cell, a magneto-elastic load cell and/or a piezo-electric load cell.

The load sensitive device 10 receives electrical power via a signal conditioning and digitizing sub-system 12. The signal conditioning and digitizing sub-system 12 and other constituent parts are provided with electrical power from a power supply unit 14. The power supply unit 14 may be constructed using rechargeable or non-rechargeable batteries, or it may utilize power derived from the host system, i.e. from the load handling apparatus.

The signal conditioning and digitizing sub-system 12 monitors the load sensitive device 10 and converts an analog signal output from the load sensitive device 10 into a digital load signal suitable for post-processing. The digital load signal is passed to a control unit 16 which converts the signal into engineering units using calibration details stored in a local non-volatile memory sub-system 18.

A single or dual axis angle meter 20 is provided for measuring an angle or angles formed between a load sensitive axis or load sensitive axes, respectively, of the load sensitive device 10 and a plane generated as an artificial horizon with respect to the earth. The angle meter 20 may be implemented by an inclinometer, an accelerometer or a similar transducer, and is connected to the control unit 16.

The control unit 16 uses the angle data output from the angle meter 20 to compensate for reduction in the indicated weight output from the load sensitive device 10 brought about by the tilt effect of the measured force. In other words, the control unit 16 calculates a tilt compensated load value based on the load value output from the load sensitive device 10 and the tilt angle output from the angle meter 20.

The tilt compensated load signal is then further enhanced and modified by applying a local gravity correction factor to account for significantly mobile applications. To this end, the control unit 16 is connected to a position receiving device 22 which receives latitude and elevation data from a global positioning system. The local gravity correction factor is automatically determined from a corresponding pre-programmed lookup table or an equivalent mathematical calculation based on the received latitude and elevation data. Reference numeral 23 designates an antenna coupled to the position receiving device 22.

The calibration details and other details will be stored in the non-volatile memory sub-system 18 for later retrieval and use by the control unit 16.

The load sensitive device 10, the signal conditioning and digitizing sub-system 12, the power supply unit 14, the control unit 16, the memory sub-system 18, the angle meter 20, and the position receiving device 22 are arranged in a housing 24 which is mounted on the load handling apparatus such that the load handled by the load handling apparatus and to be determined by the load indicating system acts only on the load sensitive device 10, whereas the housing 24 itself and the other system components contained therein are not subject to external forces.

Also contained in the housing 24 is a radio transceiver 26 coupled to the control unit 16 and enabling communication between the control unit 16 and a controller 28 of a remote indicating means 30 via a wireless radio link 32. Reference numeral 27 designates an antenna coupled to the transceiver 26.

The wireless radio link 32 can be implemented using any kind of wireless communication technology, for instance Zigbee, Wi-Fi, Bluetooth, private network, etc. operating on ISM band or any other certified frequency or modulation mode, including by way of example a private network operating in the ISM band of 2.4 GHz.

In addition to the controller 28, the remote indicating means 30 further comprises a display 34 connected to the controller 28 and a user interface 36 connected to the controller 28. Reference numeral 29 designates an antenna coupled to the controller 28.

Via the wireless radio link 32, the controller 28 of the remote indicating means 30 receives data relating to the measured load from the control unit 16 for further processing and/or to be displayed on the display 34. Similarly, the controller 28 may retrieve calibration details and other data stored in the non-volatile memory sub-system 18 via the wireless radio link 32.

The user interface 36 allows an operator of the system to enter user commands to be transmitted to the control unit 16 in order to update data contained in the lookup table, to update software implemented in the control unit 16, to enter latitude and elevation data for the position receiving device 22, and/or to generally adapt the load indicating system to different operating conditions.

As can be seen from Fig. 1, the controller 28, the display 34 and the user interface 36 are integrated to form a single unit. However, it will be understood that it is also possible to realize the controller 28, the display 34 and the user interface 36 as two or three separate modules.

### Reference numeral list

- 10: load sensitive device
- 12: signal conditioning and digitizing sub-system
- 14: power supply unit
- 16: control unit
- 18: memory sub-system
- 20: angle meter
- 22: position receiving device
- 23: antenna
- 24: housing
- 26: transceiver
- 27: antenna
- 28: controller
- 29: antenna
- 30: remote indicating means
- 32: wireless radio link
- 34: display
- 36: user interface

## Claims

1. A load indicating system comprising:
at least one load sensitive device (10) for determining a first load value;
at least one tilt sensitive device (20) for determining a tilt angle formed between a load sensitive axis of the load sensitive device (10) and a predefined plane of reference;
a control unit (16) coupled to the load sensitive device (10) and the tilt sensitive device (20) for determining a tilt compensated second load value based on the first load value and the tilt angle; and
a wireless communication link (32) to communicate data between the control unit (16) and a remote indicating means (30).

2. A system in accordance with claim 1,
**characterized in that**
the predefined plane of reference is an artificial horizon with respect to the earth.

3. A system in accordance with claim 1 or 2,
**characterized in that**
the second load value is determined by applying to the first load value a correction factor that is based on the tilt angle.

4. A system in accordance with any one of the preceding claims,
**characterized by**
a correction of the tilt compensated second load value for local gravity conditions.

5. A system in accordance with any one of the preceding claims,
**characterized in that**
the control unit (16) is coupled to a position receiving device (22) for receiving latitude and elevation data from a global positioning system.

6. A system in accordance with any one of the preceding claims,
**characterized in that**
the control unit (16) is configured to correct the second load value based on data obtained from a pre-programmed lookup table or a corresponding mathematical calculation based on data received from the position receiving device (22).

7. A system in accordance with any one of the preceding claims,
**characterized in that**
the control unit (16) is configured to determine based on the input from the load sensitive device (10) and/or the tilt sensitive device (20) if the amount of the determined second load value is valid.

8. A system in accordance with any one of the preceding claims,
**characterized in that**
the control unit (16) is configured to determine based on the input from the load sensitive device (10) and/or the tilt sensitive device (20) if a weight indication or a force indication is to be employed.

9. A system in accordance with any one of the preceding claims,
**characterized in that**
the load sensitive device (10) includes at least one element of the
group comprising a strain gauge, a hydraulic load cell, a magneto-elastic load cell and a piezo-electric load cell.

10. A system in accordance with any one of the preceding claims,
**characterized in that**
the load sensitive device (10) is an integral part of the load handling apparatus.

11. A system in accordance with any one of the preceding claims,
**characterized in that**
the remote indicating means (30) comprises a display (34), a controller (28) and a user interface (36).

12. A system in accordance with claim 11,
**characterized in that**
the display (34), the controller (28) and the user interface (36) are integrated to form a unit.
